# EUROPEAN PATENT SPECIFICATION

(11) **EP 3 639 644 B1**
(45) Date of publication and mention of the grant of the patent: **12.01.2022**
(21) Application number: 19206469.9
(22) Date of filing: 16.11.2016
(51) Int. Cl.: A01D 34/00, A01D 75/18, A01D 34/82

(54) **ROBOTIC AGRICULTURAL VEHICLE WITH SAFETY MEASURES**
ROBOTISCHES LANDWIRTSCHAFTLICHES FAHRZEUG MIT SICHERHEITSMASSNAHMEN
VÉHICULE AGRICOLE ROBOTIQUE COMPORTANT DES MESURES DE SÉCURITÉ

(30) Priority: 17.11.2015 DK PA201500731
(43) Date of publication of application: 22.04.2020
(62) Divisional of application: 16818994.2
(73) Proprietor: engbakken Group's Holding ApS, 5290 Marslev (DK)
(72) Inventor: LOTT, Kenneth, 6400 Sønderborg (DK)
(74) Representative: Inspicos P/S

(56) References cited:
- EP-A1- 2 884 364
- EP-A2- 2 340 701
- WO-A1-01/70541
- WO-A1-2015/066461
- GB-A- 2 013 073
- US-A- 3 154 903
- US-A- 3 375 645

## Description

The present invention relate to a robotic vehicle such as a lawn mower or for agricultural purposes having an operational part operating on an irregular surface and where it comprises safety means such as a protection cover adapting to the changes in the irregular surface and optional scanners and bump detecting means.

### BACKGROUND

When autonomously moving vehicles operate in environments where it may encounter living beings it is essential to ensure safety. This is especially relevant when the vehicle has operational means that potentially may make significant damage, such as the cutters of a lawn mower. This is event more relevant when the vehicle is of a large scale such as having dimensions comparable to a car with a length and width in the range of meters.

The object of the present invention is both to introduce first safety means to limit the risk that any living being of a certain sizes is capable of getting into contact with the operation means.

GB 2 013 073 A discloses a power mower comprising a first frame resting on the ground through a pair of driving wheels and a pair of steering wheels. A second frame is carried by the first frame and is vertically movable with respect thereto. A ram is provided for raising and lowering the second frame. The power mower is capable of operating along steep slopes.

WO 01/70541 A1 discloses a tactile sensor that moves between inactive and active states. Its construction allows it to cover surfaces that are curved or that include bends. The tactile sensor can be used as bumper where contact with an object, surface or the like needs to be detected.

WO 2015/066461 A1 discloses a scanning optical range finder in a mobile robot including an optical emitter circuit, a non-imaging optical element, and optical detector circuit, and a ranging circuit. The ranging circuit is configured to calculate a range of a target from phase differences indicated by the detection signals.

### SUMMARY OF THE INVENTION

The present invention thus relates to a robotic vehicle according to claim 1, having an operational part operating on an irregular surface, and a first moving part and second moving part adapted to contact and transport the vehicle along the irregular surface. A chassis frame is fixed relative to one of said first or second moving part in a manner where they may tilt relative to the other of said front or back moving part under the influence of the changes in the irregular surface. In one embodiment the first moving part is a front moving part seen in the direction of the movement of the vehicle, and the second moving part is a back moving part, but the reverse also may apply to the invention. If the chassis frame is relatively close to the surface, meaning it is only lifted slightly (such as in the range of centimetres, e.g. less than 1 cm, or less than 5 cm, or less than 10 cm or less than 15 cm or less than 20 cm). Due to the tilting possibility of the chassis frame it may level itself according to the actual encountered surface and thus reducing the risk of living beings or other objects entering under the chassis frame to get in contact with the operating part.

In an embodiment first moving part is fixed relative to the chassis frame and further is rotationally connected relative to the second moving part such that it may rotate around an axis extending in length direction relative to the chassis frame. In this manner, e.g. if the first moving part is the front moving part, then the front part of the chassis frame seen in the direction of the movement of the vehicle will level to the surface area firstly encountered by the vehicle, thus reducing the risk even further that living beings or objects in front of the vehicle gets under the chassis frame.

If the chassis frame further carries and is connected to a protection cover enclosing all the internal operational parts of the vehicle it offers a further shield of protection as living beings and objects cannot get in contact with the internal of the vehicle from above the chassis frame.

To ensure equality in the side-to-side tilting the axis may be a centre axis roughly in the middle of the width of the chassis frame.

For the operational part to adapt to the irregular surface to achieve the best possible contact for the operation (e.g. cutting grass) the operational part is rotationally connected relative to the chassis frame through a second suspension part such that they may rotate relative to each other around an axis parallel to the centre axis.

The tilting chassis frame may be said to offer a first means of protection.

As a second means of protection the robotic vehicle the vehicle further may comprise a scanner connected to a controller such that when an object or living being comes into the view of the scanner of the vehicle a safety action is initiated. This could include many different actions, such as sending an alarm, stopping the vehicle and / or stopping the operational part. In this manner a first guard of safety is ensured scanning the nearest area surrounding the vehicle and taking an action when registering an object, e.g. living being, even before it comes into contact with the vehicle.

The vehicle comprises two scanners where a first scanner is positioned such that it has a significant view range to respectively the sides and the front of the vehicle and operates at a 'long range' relative to a second scanner positioned being scanning at a 'short range'. In this manner two parts of a safety action may be included, the first alerting the vehicle something may be close by, thus lowering the speed, and the second then telling the vehicle is close to contacting the object, thus it could be positioned in front of the vehicle seen in the direction of movement.

This is utilized in introducing a procedure where the two scanners are adapted to operate such that the 'long range' scanner first detects possible objects being in the path of the vehicle and slows down the vehicle to a first reduced speed when such an object is detected, and if the object subsequently enters the view of the 'short range' scanner the vehicle slows down to a second reduced speed being lower than the first reduced speed.

In addition the scanners may operate to inform of the coming surface level changes, thus the 'long range' scanner and/or 'short range' scanner also are used to measure the coming changes in the surface level the vehicle is to encounter.

Such scanners may be two laser sensors positioned in two corners of the chassis frame each covering two sides of the vehicle, thereby covering the whole area around the vehicle.

To protect the scanners they may be positioned within a deepening formed in the vehicle (such as the chassis frame) encircling it also forming a scanner path.

In one embodiment a third means of protection may be introduced registering if the vehicle contacts an object or living being, where a bump or impact sensor is connected to the vehicle such that when hit by or hitting an object or living being by a given minimum force the vehicle a safety action is initiated. This could include many different actions, such as sending an alarm, stopping the vehicle and / or stopping the operational part.

To propel the vehicle over the irregular surface the front and/or back moving parts may be wheels, rollers or caterpillars.

In one embodiment the operational part(s) forms part of a detachable part connected to a basis part including a motor and the second moving parts, where the detachable part includes a chassis frame, second suspension(s), protection cover and first moving parts.

In one embodiment the vehicle is a robotic lawn mower and the operational part comprises a cutter.

In one embodiment the vehicle is a device for agricultural purposes.

### FIGURES

- Fig. 1: Side view of a robotic lawn mower having a protection cover, front and back wheels and cutters.
- Fig. 2: View of the internal parts of a robotic lawn mower.
- Fig. 3: Top view schematically showing internal parts of a robotic lawn mower.
- Fig. 4: Front view schematically showing a robotic lawn mower on an irregular surface.
- Fig. 5: Top view of the chassis frame of a robotic lawn mower having laser scanners positioned at opposite corners.
- Fig. 6A,B: A further embodiment where the operational part(s) is included in a detachable part.
- Fig. 7: A top view illustration illustrating two scanners positioned respectively at the basis part and at the front of the detachable part.
- Figs. 8: Illustration of a first embodiment of the detachable part showing some of the internal parts including the chassis frame, the front moving parts, the operational parts.
- Figs. 9: Illustration of a second embodiment of the detachable part showing some of the internal parts including the chassis frame, the front moving parts, the operational parts.

### DETAILED DESCRIPTION OF THE INVENTION

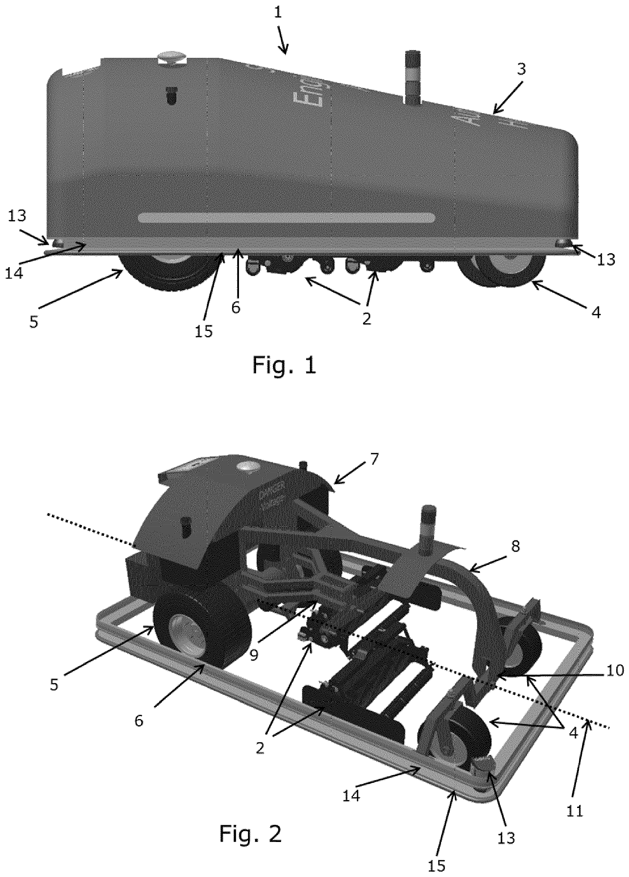

Fig. 1 illustrates an embodiment of a vehicle (1) especially an autonomously moving device, such as a robotic vehicle (1), having an operational part (2) to work on an irregular surface, such as the ground surface. In the illustrated embodiment of example the vehicle (1) is illustrated as a robotic lawn mower (1), the operational part (2) being the cutters (2) to cut the grass, but may also be a vehicle (1) for agricultural purposes such as for cutting crop, harvesting in general, ploughing etc.

The vehicle (1) comprises a protection cover (3) adapted both to cover the internal parts from the external conditions, such as rain etc., and to protect the externals from the inside parts, especially from the cutters (2).

Front moving parts (4) and back moving parts (5) are adapted to contact the irregular surface and to drive the robotic lawn mower (1) along it, and could be rollers, caterpillars etc. In the illustrated embodiment the moving parts (4, 5) are sets of front wheels (4) and back wheels (5).

The protection cover (3) is attached to and carried by a chassis frame (6), were fig. 2 illustrates an embodiment of a chassis frame (6) and an embodiment of internal parts of the vehicle (1) to the protection cover (3) comprising an internal suspension (7) carrying the non-contact parts like the motor, steering, controllers, GPS, receivers, transmitters etc., in general all or at least many of the parts not intended to be in contact with the irregular surface but needed to move the vehicle (1) and to control the movement. Further the suspension includes a first suspension part (8) connected to an axle (10) connected to the front wheels (4), where the connection is rotational, such as a pivot connection, such that the axle (10) may rotate relative to the first suspension part (8) around an axis (11). In an embodiment the axis (11) extends in a longitudinal direction of the vehicle and may be at the centre of the chassis frame (6) relative to its width. The axle (10) is fixed to the chassis frame (6).

Further the internal suspension in an embodiment includes a second suspension part (9) connected to the cutters (2) which in an embodiment in a similar manner may be rotational connections such like pivot, leaving the cutters (2) free to rotate around an axis parallel to the axis (11).

The axel connected to the back wheels (5) is further connected to the internal suspension, where this connection in one embodiment is not rotational the back wheels (5) therefore not being allowed any rotation relative to the internal suspension around an axis in a direction like axis (11).

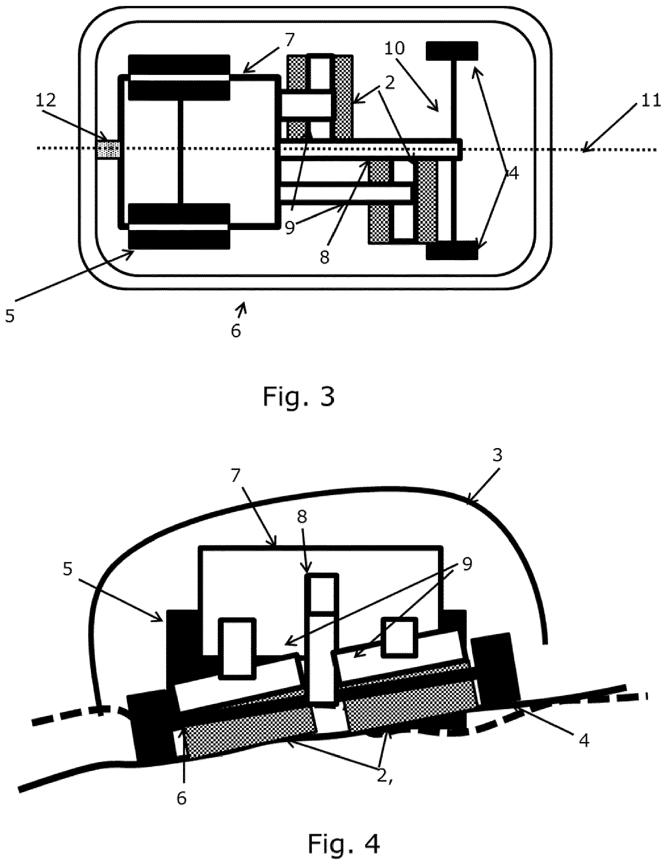

Fig. 3 is a top view illustration schematically showing an embodiment where the internal suspension (7) is connected (12) to the chassis frame (6), where this connection may be a rotational, e.g. pivot, connection. This leaves the internal suspension (7) and chassis frame (6) free to rotate relative to each other around an axis at least parallel to, or being the same, as the axis (11).

The vehicle (1) moving over the irregular surface usually has the chassis frame (6), and thus the protection cover (3), lifted slightly above the ground, e.g. 5 cm, or 10 cm or 15 cm. Thereby the chassis frame (6) will not be affected by minor bumps and irregularities on the surface, but only for surface features at a larger scale than by the lifting scale above the ground. If the protection cover (3) was fixed relative to the internal chassis (7), the vehicle may risk being tilted at a manner where a side of the chassis frame (6) is lifted from the ground at a height where objects and living beings may risk getting under the protection cover (3) and in contact with the cutters (2). This is highly undesirable.

In the vehicle (1) of the illustrated embodiment the front wheels (4) are positioned near the front of the chassis frame (6) but in front of the cutters (2), seen in the direction of movement of the vehicle (1). The front wheels (4) by gravity therefore will tend to level to the surface area as first encountered by the vehicle as it is in front of the cutters (2).

Since the front wheels (4) are free to rotate around an axis (11) relative to the internal chassis (7), and since the axle (10) is fixed to the chassis frame (6), the chassis frame (6) and the connected protection cover (3) will tilt to the sides following the surface area firstly encountered by the vehicle (1). Therefore it at all times will be essentially level to this firstly encountered surface area reducing the risk the chassis frame (6) will be lifted significantly more from the surface level than its inherited height.

In the embodiment where the cutters (2) themselves each are free to rotate around axes, possible parallel to the axis (11), they will follow the changing ground level at a more local scale due to their smaller dimensions than those of the vehicle (1). In one embodiment the second chassis part (9) will also allow and up and down movement letting the cutters (2) adapt to small scale bumps and hollows in the surface compared to the extension of the vehicle (1), and not only side-wards slopes.

This is also illustrated in Fig. 4 where the cutters (2) and front wheels (4) are seen to follow the illustrated sloping surface ground in the first encountered surface area (solid curvy line). The ground surface area encountered by the back wheels (5) (slashed curvy line) has a slightly different topology than the first surface area. The cutters (2) are therefore seen to have slightly different rotations relative to the chassis frame (6) and protection cover (3), but have the same rotation as the front wheels (4), since these having their own individual rotational connections thus themselves reacting to the changing surface.

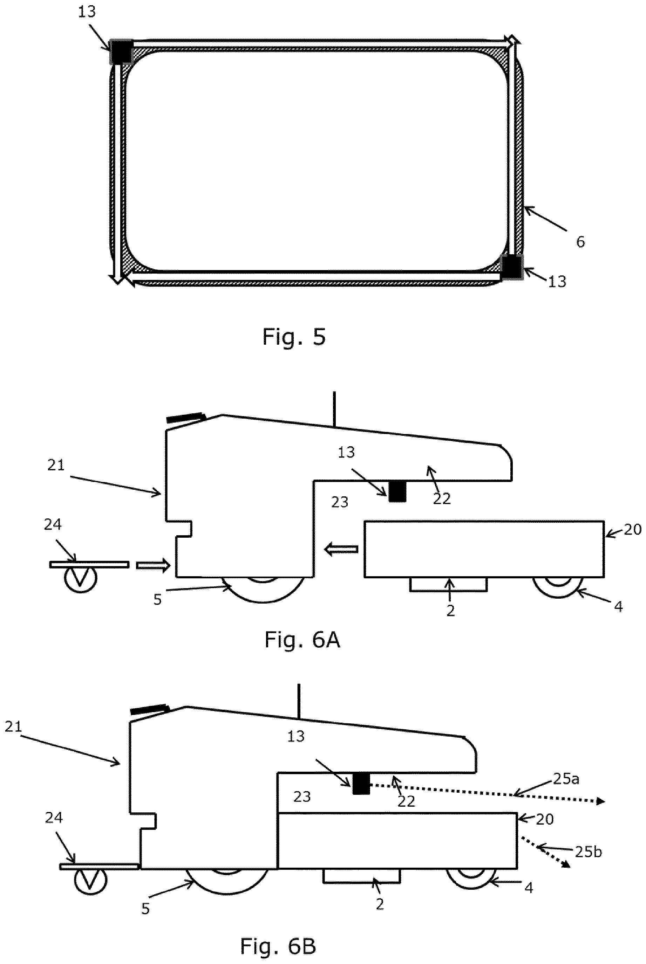

In addition to the protection cover (3), in one embodiment the vehicle (1) is equipped with scanners (13), such as lasers (13), positioned to monitor the sides of the vehicle (1) along the chassis frame (6). In the embodiment of Fig. 5 two scanners (13) being lasers (13) are positioned in two opposite corners of the chassis frame (6), each monitoring two sides. When scanner signal from the scanner (13) is broken by an object or living being entering the path the vehicle (1) and cutters (2) some safety function is activated. This could include many different actions, such as sending an alarm, stopping the vehicle (1) and / or stopping the cutters (2).

Scanners (13) such like lasers (13) are also to be seen in Figs. 1 and 2 also showing an embodiment where they are positioned within a deepening (14) in the external side wall of the chassis frame (6). This offers protection to the scanners (13) against external impacts, such as if the vehicle (1) is hit by objects, or simply from rain and other associated events. The deepening (14) further offers a path for the scanner signal such as the light for the lasers (13).

In an embodiment, as an extra safety feature the vehicle (1) comprises and is encircled by a bump or impact sensor (15). If the vehicle (1) is hit by any object or living being entering its path of movement, some safety function is activated. This could include many different actions, such as sending an alarm, stopping the vehicle (1) and / or stopping the cutters (2).

The operation of the vehicle (1) operating robotic in an embodiment is to be controlled by GPS, the vehicle (1) thus comprising the means to have its position recognized and its movement controlled accordingly possible under some algorithm.

Fig. 6A and 6B illustrate further possible embodiments of the vehicle (1), where the operational part(s) (2) is included in a detachable part (20), such as formed by a detachable chassis frame (6), including any of all of the first suspension part (8) and second suspension(s) (9), protection cover (3), axle (10) and front moving parts (4) (or alternatively the detachable part (20) includes the internal suspension (7) and back moving parts (5)).

The detachable part (20) is to be connected to a basis part (21) of the vehicle (1), such as including the internal suspension (7) and back moving parts (5) where the basis part (21) carries the non-contact parts like the motor, steering, controllers, GPS, receivers, transmitters etc., in general all or at least many the parts not intended to be in contact with the irregular surface but needed to move the vehicle (1) and to control the movement. In an alternative embodiment the second suspension (8) would form the basis for the vehicle (1), or the vehicle (1) would move in the reverse direction such that the front moving parts (4) would be connected to the basis part comprising the parts like the motor, steering, controllers, GPS etc.

In one embodiment the detachable part (20) part including the thereto connected devices and parts are connected to the basis part through the first suspension part (8).

Fig. 6A illustrates the detachable part (20) being disconnected from the basis part (21) of the vehicle (1) and in fig. 6B they are seen connected making the vehicle (1) operational. In this manner a single basis part (21) could be connectable to a plural of different detachable parts (20) having very different operational parts (2).

In the same manner as in the previous embodiments, in an embodiment according to the illustrations of figs. 6A and 6B the front wheels (4) are free to rotate around an axis (11) (not seen) relative to the internal chassis frame (7), and since the axle (10) is fixed to the chassis frame (6), the chassis frame (6) and the connected protection cover (3) will tilt to the sides following the surface area firstly encountered by the vehicle (1). Therefore it at all times will be essentially level to this firstly encountered surface area reducing the risk the chassis frame (6) will be lifted significantly more from the surface level than its inherited height.

Fig. 6A and 6B further illustrate another embodiment which could also apply to any of the previously described and illustrated embodiments, where the top surface of the chassis frame (6) is lower than a bottom surface (22) of a base part (21) of the vehicle (1) (this embodiment could also apply in the embodiments where the chassis frame (6) is not detachable from the basis part (21), such that the detachable part (20) is rather fixed to the basis part (21) only leaving the operational parts (2) to be detachable and thus exchangeable). This leaves a space (23) between the top surface of the chassis frame (6) and bottom surface (22) of a base part (21) where a scanner (13), such as a laser (13) could be positioned. An additional scanner (13) could be positioned at the front of the vehicle, such as at the front of the detachable part (20), and/or the chassis frame (6).

Fig. 6A and 6B further illustrate a user platform (24) that optionally is an integrated part of the vehicle (1) or is connectable to it. An operator may stand on the user platform (24) during the movement of the vehicle (1) such as for operating and/or programming it.

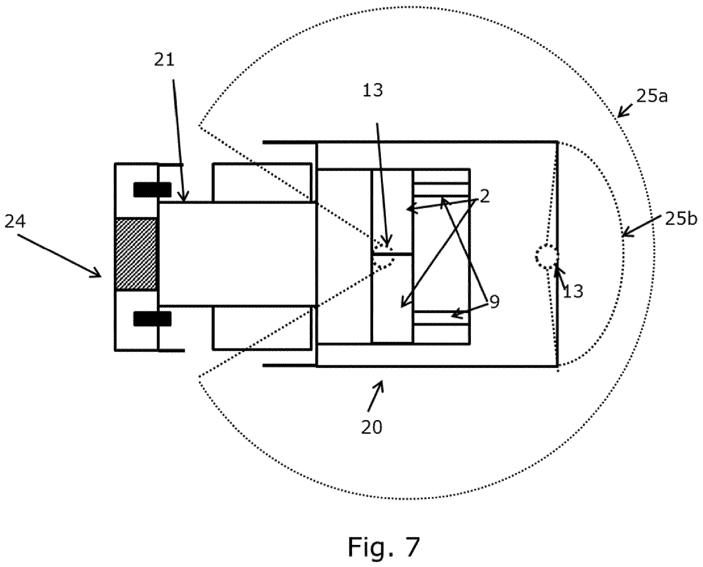

Fig. 7 is a top view illustration of a vehicle (1) such as according to the embodiment of figs. 6A and 6B illustrating the two scanners (13) positioned respectively at the basis part (21) and at the front of the detachable part (20). The scanner (13) positioned at the basis part (21) in the space (23) is seen to have a significant view range to respectively the sides and the front of the vehicle, and is also at a larger distance, or at a 'long range' (25a), at least seen relative to the scanner (13) positioned at the detachable part (20), being scanning at a 'short range' (25b).

The 'long range' scanner (13) first detects possible objects being in the path of the vehicle (1) and according to one method of operation it slows down to a first reduced speed when such an object is detected. If the object also enters the view of the 'short range' scanner (13) it slows even further down to a second reduced speed being lower than the first reduced speed. If the vehicle (1) then actually reaches and touches the object it will be at a low speed, and according to an embodiment method the bump or impact sensor (15). If this happens the vehicle (1) then would initiate a third step in the method, such as initiate the safety function as has previously been described.

In one embodiment the second reduced speed may be zero, the vehicle (1) thus stopping when either the object comes in the reach of the 'short range' scanner (13), or when getting in contact with the bump or impact sensor (15),

The 'long range' and 'short range' scanners (13) and bump or impact sensor (15) thus forms part of the safety action being activated (first and second reduced speed and stopping the vehicle (1)).

In a further embodiment the 'long range' scanner (13) and/or 'short range' scanner (13) also are used to measure the coming changes in the surface level the vehicle (1) is to encounter.

Fig. 7 further illustrate an embodiment where at least a part of the top surface of the detachable part (20) is transparent such that the operational parts (2) are visible.

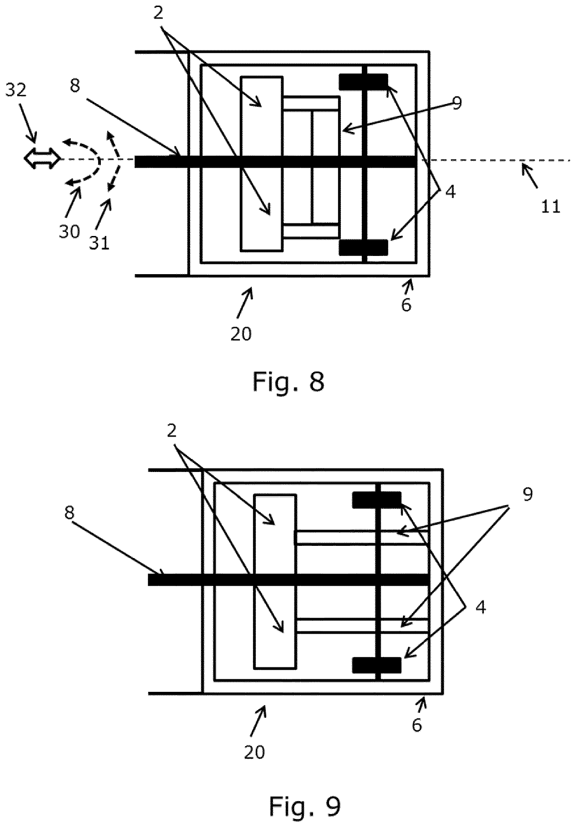

Figs. 8 and 9 illustrate embodiments of the detachable part (20) illustrating some of the internal parts including the chassis frame (6), the front moving parts (4), the operational parts (2). The fixing of the detachable part (20) to the basis part (21) is done through a first suspension (8) to be connected to the basis part (21) in a joint at least able of a rotation (30), and optionally of a side-to-side movement (31), of the detachable part (20) relative to the basis part (21) around an axis (11), where the axis may extending in a length direction of the detachable part (20). In addition the connection is capable of an up-and-down rotation (32) around an axis perpendicular to the axis (11) such that the detachable part (20) independently may adapt its front moving parts (4) to the changing surface level seen relative to the back moving parts (5).

It should be noted that all the embodiments illustrated and described could be reversed, the vehicle (1) thus driving in the opposite direction, the front moving parts (4) illustrated then being back moving parts seen relative to the driving directions, and the back moving parts (5) then being front moving parts seen relative to the driving directions.

The front moving parts (4) may be fixed relative to the chassis frame (6) and may in an embodiment be connected to this.

The operational parts (2) may be connected to either the first suspension (8) (illustrated in fig. 8) or the chassis frame (6) (illustrated in fig. 9) through a second suspension (9) formed as one or a plural parts.

The operational parts (2) may in an embodiment be powered by the basis part (21) through the first suspension (8), where this could be any kind of powering like electronically, mechanically, hydronically etc.

The operational parts (2) may be connected in a manner where they individually are capable of a rotation (31), and optionally a side-to-side movement (31), relative to the chassis frame (6) around an axis parallel to the axis (11).

In addition the operational parts (2) may be connected in a manner where they individually or in a group are capable of an up-and-down rotation (32) around an axis perpendicular to the axis (11) such that they independently may adapt to the changing surface level seen relative to the front moving parts (4).

## Claims

1. Robotic vehicle (1) having an operational part (2), for operating on an irregular surface and first moving part (4) and second moving part (5) adapted to contact and transport the vehicle (1) along the irregular surface, where a chassis frame (6) is fixed relative to one of said first or second moving part (4, 5) in a manner where they may tilt relative to the other of said first or second moving part (4, 5) under the influence of the changes in the irregular surface,
**characterized in that**
the vehicle (1) further comprises two scanners (13) where a first scanner (13) is positioned such that it has a significant view range to respectively the sides and the front of the vehicle and operates at a 'long range' (25a) relative to a second scanner (13) being positioned such that it scans at a 'short range' (25b),
wherein the two scanners (13) are adapted to operate such that the 'long range' scanner (13) first detects possible objects being in the path of the vehicle (1) and slows down the vehicle (1) to a first reduced speed when such an object is detected, and if the object subsequently enters the view of the 'short range' scanner (13) the vehicle (1) slows down to a second reduced speed being lower than the first reduced speed.

2. Robotic vehicle (1) according to claim 1, wherein the first moving part (4) is fixed relative to the chassis frame (6) and further is rotationally connected relative to the second moving part (5) such that it may rotate around an axis (11) extending in length direction relative to the chassis frame (6).

3. Robotic vehicle (1) according to claim 2, wherein the axis (11) is a centre axis roughly in the middle of the width of the chassis frame (6).

4. Robotic vehicle (1) according to claim 3, wherein the operational part (2) is rotationally connected relative to the chassis frame (6) through a second suspension part (9) such that they may rotate relative to each other around an axis parallel to the centre axis (11).

5. Robotic vehicle (1) according to any of the preceding claims, where the 'long range' scanner (13) and/or 'short range' scanner (13) also are used to measure the coming changes in the surface level the vehicle (1) is to encounter.

6. Robotic vehicle (1) according to any of the preceding claims, wherein the vehicle (1) comprises a bump or impact sensor (15) such that when hit by or hitting an object or living being by a given minimum force a safety action is initiated.

7. Robotic vehicle (1) according to claim 6, wherein the safety action includes that the operational part (2) is being shut off.

8. Robotic vehicle (1) according to any of the preceding claims, wherein the operational part(s) (2) forms part of a detachable part (20) connected to a basis part (21) including a motor, where the detachable part (20) includes a chassis frame (6), second suspension(s) (9), protection cover (3) and first moving parts (4).

9. Robotic vehicle (1) according to any of the preceding claims, wherein it is a robotic lawn mower and the operational part (2) comprises a cutter.

10. Robotic vehicle (1) according to any of the preceding claims, wherein it is a device for agricultural purposes.

## Patentansprüche

1. Roboterfahrzeug (1), das einen Betriebsteil (2) zum Betrieb auf einer unregelmäßigen Fläche und einen ersten Bewegungsteil (4) sowie einen zweiten Bewegungsteil (5) aufweist, die ausgelegt sind, um mit dem Fahrzeug (1) in Kontakt zu stehen und es entlang der unregelmäßigen Fläche zu transportieren, wobei ein Fahrgestellrahmen (6) relativ zu einem von dem ersten oder dem zweiten Bewegungsteil (4, 5) in einer Weise fixiert ist, in der sie relativ zu dem anderen von dem ersten oder dem zweiten Teil (4, 5) unter Einfluss der Veränderungen der unregelmäßigen Fläche kippen können, **dadurch gekennzeichnet, dass**
das Fahrzeug (1) ferner zwei Scanner (13) umfasst, wobei ein erster Scanner (13) derart positioniert ist, dass er einen erheblichen Sichtfeldbereich jeweils seitlich von und vor dem Fahrzeug aufweist und in einem 'Weitbereich' (25a) relativ zu einem zweiten Scanner (13) betrieben wird, welcher derart positioniert ist, dass er in einem ,Nahbereich' (25b) scannen kann,
wobei die beiden Scanner (13) ausgelegt sind, um derart betrieben zu werden, dass der 'Weitbereich'-Scanner (13) mögliche Objekte, die sich im Weg des Fahrzeugs (1) befinden, zuerst erfasst und das Fahrzeug (1) auf eine erste reduzierte Geschwindigkeit abbremst, wenn ein derartiges Objekt erfasst wird, und, wenn das Objekt nachfolgend in das Sichtfeld des 'Nahbereich'-Scanners (13) eintritt, das Fahrzeug (1) auf eine zweite reduzierte Geschwindigkeit abbremst, die niedriger ist als die erste reduzierte Geschwindigkeit.

2. Roboterfahrzeug (1) nach Anspruch 1, wobei der erste Bewegungsteil (4) relativ zu dem Fahrgestellrahmen (6) fixiert ist und ferner relativ zu dem zweiten Bewegungsteil (5) drehbar verbunden ist, sodass er sich um eine Achse (11) drehen kann, die sich in einer Längenrichtung relativ zu dem Fahrgestellrahmen (6) erstreckt.

3. Roboterfahrzeug (1) nach Anspruch 2, wobei die Achse (11) eine Mittelachse in etwa in der Mitte der Breite des Fahrgestellrahmens (6) ist.

4. Roboterfahrzeug (1) nach Anspruch 3, wobei der Betriebsteil (2) relativ zu dem Fahrgestellrahmen (6) durch einen zweiten Aufhängungsteil (9) drehbar verbunden ist, sodass sie sich relativ zueinander um eine Achse drehen können, die parallel zu der Mittelachse (11) liegt.

5. Roboterfahrzeug (1) nach einem der vorhergehenden Ansprüche, wobei der 'Weitbereich'-Scanner (13) und/oder der 'Nahbereich'-Scanner (13) auch verwendet werden, um die bevorstehenden Veränderungen in der Flächenebene zu messen, denen das Fahrzeug (1) begegnen wird.

6. Roboterfahrzeug (1) nach einem der vorhergehenden Ansprüche, wobei das Fahrzeug (1) ein Bodenschwellen- oder Aufprallsensor (15) umfasst, sodass, wenn es von einem Gegenstand oder Lebewesen mit einer bestimmten Mindestkraft getroffen wird oder darauf trifft, eine Sicherheitsaktion eingeleitet wird.

7. Roboterfahrzeug (1) nach Anspruch 6, wobei die Sicherheitsaktion umfasst, dass der Betriebsteil (2) ausgeschaltet wird.

8. Roboterfahrzeug (1) nach einem der vorhergehenden Ansprüche, wobei der/die Betätigungsteil/e (2) einen Teil eines ablösbaren Teils (20) bildet/n, der mit einem Basisteil (21) verbunden ist, welcher einen Motor aufweist, wobei der ablösbare Teil (20) einen Fahrgestellrahmen (6), (eine) zweite Aufhängung(en) (9), eine Schutzabdeckung (3) und erste Bewegungsteile (4) aufweist.

9. Roboterfahrzeug (1) nach einem der vorhergehenden Ansprüche, wobei es ein Roboter-Rasenmäher ist und der Betriebsteil (2) eine Schneideeinrichtung umfasst.

10. Roboterfahrzeug (1) nach einem der vorhergehenden Ansprüche, wobei es eine Vorrichtung für landwirtschaftliche Zwecke ist.

## Revendications

1. Véhicule robotisé (1) comportant une partie fonctionnelle (2) pour un fonctionnement sur une surface irrégulière et une première partie mobile (4) et une deuxième partie mobile (5) adaptées pour toucher et transporter le véhicule (1) le long de la surface irrégulière, dans lequel un cadre de châssis (6) est fixe par rapport à l'une desdites première ou deuxième parties mobiles (4, 5) de manière à ce que celle-ci puisse s'incliner par rapport à l'autre desdites première ou deuxième parties mobiles (4, 5) sous l'influence des changements dans la surface irrégulière,
**caractérisé en ce que**
le véhicule (1) comprend en outre deux scanners (13), un premier scanner (13) étant positionné de manière à avoir une plage de vision significative respectivement sur les côtés et à l'avant du véhicule et fonctionnant sur une « plage longue » (25a) par rapport à un deuxième scanner (13) positionné de manière à effectuer un balayage sur une « plage courte » (25b),
dans lequel les deux scanners (13) sont adaptés pour fonctionner de telle façon que le scanner à « plage longue » (13) détecte d'abord des objets possibles sur le trajet du véhicule (1) et fait ralentir le véhicule (1) à une première vitesse réduite lorsqu'un tel objet est détecté, et si l'objet entre ensuite dans le champ de vision du scanner à « plage courte » (13), le véhicule (1) ralentit à une deuxième vitesse réduite inférieure à la première vitesse réduite.

2. Véhicule robotisé (1) selon la revendication 1, dans lequel la première partie mobile (4) est fixe par rapport au cadre de châssis (6) et en outre reliée de façon rotative par rapport à la deuxième partie mobile (5) de manière à pouvoir tourner autour d'un axe (11) s'étendant dans la direction longitudinale par rapport au cadre de châssis (6).

3. Véhicule robotisé (1) selon la revendication 2, dans lequel l'axe (11) est un axe central approximativement au milieu de la largeur du cadre de châssis (6).

4. Véhicule robotisé (1) selon la revendication 3, dans lequel la partie fonctionnelle (2) est reliée de façon rotative par rapport au cadre de châssis (6) par le biais d'une deuxième partie de suspension (9) de telle façon que ceux-ci peuvent tourner l'un par rapport à l'autre autour d'un axe parallèle à l'axe central (11).

5. Véhicule robotisé (1) selon l'une quelconque des revendications précédentes, dans lequel le scanner à « plage longue » (13) et/ou le scanner à « plage courte » (13) sont également utilisés pour mesurer les changements à venir dans le niveau de surface que le véhicule (1) est susceptible de rencontrer.

6. Véhicule robotisé (1) selon l'une quelconque des revendications précédentes, dans lequel le véhicule (1) comprend un détecteur de bosses ou d'impact (15), de sorte qu'une action de sécurité est initiée lors d'une collision d'une force minimale prédéfinie avec un objet ou un être vivant.

7. Véhicule robotisé (1) selon la revendication 6, dans lequel l'action de sécurité comprend l'arrêt de la partie fonctionnelle (2).

8. Véhicule robotisé (1) selon l'une quelconque des revendications précédentes, dans lequel la/les partie(s) fonctionnelle(s) (2) fait/font partie d'une partie détachable (20) reliée à une partie de base (21) comprenant un moteur, la partie détachable (20) comprenant un cadre de châssis (6), une/des deuxième(s) suspension(s) (9), un couvercle de protection (3) et des premières parties mobiles (4).

9. Véhicule robotisé (1) selon l'une quelconque des revendications précédentes, dans lequel celui-ci est une tondeuse robotisée et la partie fonctionnelle (2) comprend une lame.

10. Véhicule robotisé (1) selon l'une quelconque des revendications précédentes, dans lequel celui-ci est un dispositif à usage agricole.
